(19) Europäisches Patentamt / European Patent Office / Office européen des brevets

(11) **EP 2 730 517 A1**

(12) **EUROPEAN PATENT APPLICATION**
published in accordance with Art. 153(4) EPC

(43) Date of publication:
**14.05.2014 Bulletin 2014/20**

(51) Int Cl.:
**B65D 77/00** *(2006.01)*    **A23F 3/16** *(2006.01)*

(21) Application number: **12810792.7**

(22) Date of filing: **28.06.2012**

(86) International application number:
**PCT/JP2012/066499**

(87) International publication number:
**WO 2013/008636 (17.01.2013 Gazette 2013/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2011   JP 2011152123**

(71) Applicants:
• **ITO EN, Ltd.**
  **Tokyo 151-8550 (JP)**
• **Ito En Sangyo, Ltd.**
  **Makinohara-shi, Shizuoka 421-0412 (JP)**

(72) Inventors:
• **AIZAWA, Hiromi**
  **Makinohara-shi**
  **Shizuoka 421-0412 (JP)**
• **KAJIYAMA, Katsuhisa**
  **Makinohara-shi**
  **Shizuoka 421-0412 (JP)**
• **TAKAMATSU, Motomu**
  **Makinohara-shi**
  **Shizuoka 421-0412 (JP)**

(74) Representative: **Gille Hrabal**
  **Brucknerstrasse 20**
  **40593 Düsseldorf (DE)**

(54) **INFUSION BAG**

(57)    The present invention provides a new invention provides a new infusion bag that is easy to hand1e even if a long hanging string is used, allows easy infusion, and prevents the hanging string from being caught in a sea1 part during individual-package sealing. Said infusion bag I is provided with the following: a bag part 2 that contains the substance to be used to produce an infusion; and a hanging string 3, the tip of which is affixed to a tag 5 for holding the infusion bag and the base end 3a of which is affixed to the surface 4 of the bag part 2. This infusion bag is characterized by a structure wherein: the hanging string 3 is coiled into a spira1 and disposed on the surface 4 of the bag part 2; and the tag 5 is detachably affixed to the surface 4 of the bag part 2 so as to cover the hanging string 3.

[FIG.1]

EP 2 730 517 A1

**Description**

Technical Field

The present invention relates to an infusion bag that contains black tea leaves, green tea leaves, coffee grains, bonito flakes, or the like, and allows infusion thereof.

Background Art

Black teabags can be simply steeped in hot water to easily infuse black tea. Such teabags can be also easily disposed of, and thus have been widely used. In recent years, infusion bags for preference beverages such as green tea or coffee other than black tea have been widely used.

Conventional teabags are generally made of a paper filter produced for infusion in a teacup. In recent years, teabags of mesh or unwoven fabric are also sold that have high infusion capability and can easily provide authentic flavor of leaf tea brewed by a teapot.

For conventional teabags, Figure 6 or the like in Patent Literature 1 shows a package having a notch portion in a tag, an intermediate portion of a hanging string being wound around the notch portion.

Figure 9 or the like in Patent Literature 2 shows an infusion bag around an outer periphery of which a hanging string is wound.

Figure 2 or the like in Patent Literature 3 shows an infusion package having a holding string heat sealed on a permeable bag.

Figure 1 or the like in Patent Literature 4 shows a flat teabag having a hanging string, one end of which is bonded near an intersection of diagonals on one surface of a bag.

Figures 2 and 6 or the like in Patent Literature 5 show a Tetra Pak(R) for infusing preference beverages having a tag string attached at an end to a center of one surface of a bag or an edge of the bag.

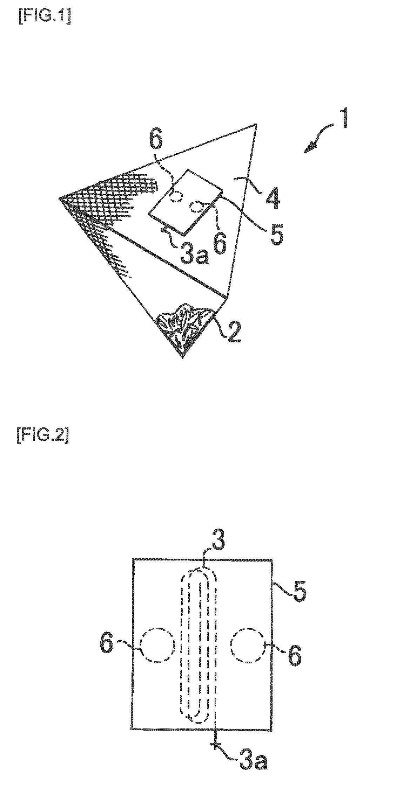

Figure 1 or the like in Patent Literature 6 shows a teabag having a hanging string of 20 cm in length for hanging a bag containing tea leaves.

Citation List

Patent Literature

Patent Literature 1: Japanese Patent Laid-Open No. 2002-211641
Patent Literature 2: Japanese Patent Laid-Open No. 2010-120667
Patent Literature 3: Japanese Patent Laid-Open No. 2002-337936
Patent Literature 4: Japanese Patent Laid-Open No. 2006-21819
Patent Literature 5: Japanese Patent Laid-Open No. 2007-246128
Patent Literature 6: Japanese Utility Model Registration No. 3081339

Summary of Invention

Technical Problem

With the hanging string wound around the tag as disclosed in Patent Literature 1, or with the hanging string sealed on an outer periphery of the infusion bag as disclosed in Patent Literatures 2 and 3, the tag must be turned or the infusion bag must be held by hand to unwind a hanging string, which is troublesome before start of an infusion work. Also, since the infusion bag is held by hand when the hanging string is unwound, fine powder of material adhering to an infusion bag surface makes the hand dirty, or fine powder of material leaking from the infusion bag is dispersed, which results in poor operability.

Most conventional teabags have a short hanging string of about 10 cm in length. Thus, in infusion in a mug generally used at home or workplace, a tag inconveniently tends to fall into the mug when hot water is poured.

Thus, as disclosed in Patent Literature 6 or the like above, it is conceivable to provide a long hanging string of an infusion bag. However, a long hanging string increases time for unwinding and worsens the operability described above. Further, the hanging string may disadvantageously be clamped in a seal portion in individual packaging, and thus merely increasing the length of a hanging string does not provide convenience.

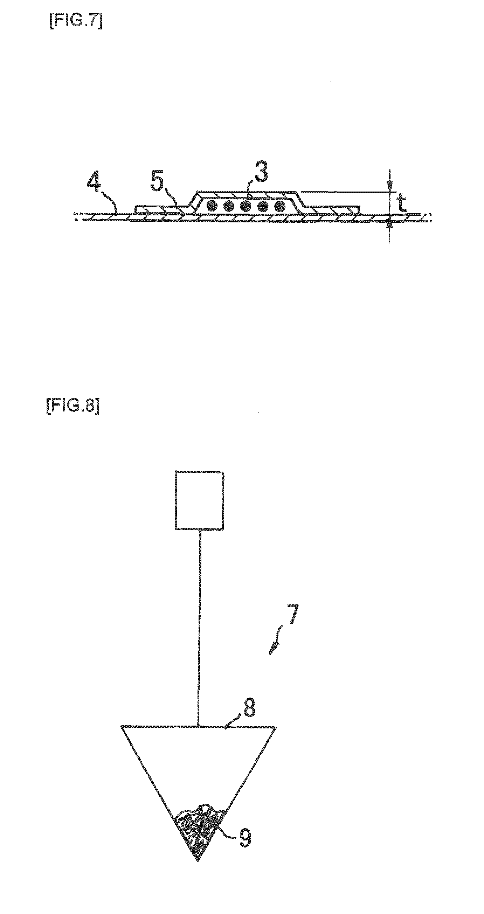

Further, a long hanging string requires stability in infusion and filtration, and as shown in Figure 1 in Patent Literature 4 and Figure 2 in Patent Literature 5, if the hanging string is attached near the center of one surface of the infusion bag, resistance increases when the teabag is vertically waved in hot water in infusion to prevent infusion. Also, in the infusion bag 7 as shown in Figure 8, a substance used for infusion 9 in a bag portion 8 gathers at a lower end apex. This prevents the substance used for infusion 9 from opening to reduce infusion capability. Further, when the teabag is pulled up from an infusion liquid, the infusion liquid disadvantageously tends to gather at the lower end apex, which prevents liquid cut, and causes continuous dripping.

The present invention has an object to provide a new infusion bag that is easy to handle even if a long hanging string is used, facilitates infusion, and can prevent the hanging string being caught in a seal portion during sealing of an individual package, and further provide an infusion bag that can improve liquid cut after infusion and prevent dripping.

Solution to Problem

The present invention proposes an infusion bag including: a bag portion containing a substance used for infusion; and a hanging string having a front end to which a tag is fastened, and a base end fastened to a surface of the bag portion, wherein the hanging string is collected into a spiral and placed on the surface of the bag portion, and the tag is detachably fastened to the surface of the bag portion so as to cover the hanging string.

In the infusion bag proposed by the present invention, the hanging string is covered with the tag. Thus, even a long hanging string can be stretched by detaching and picking up a tag from a bag portion, thereby allowing quick start of an infusion work. Also, since there is no need to hold the infusion bag by hand in unwinding the hanging string, fine powder of material adhering to an infusion bag surface does not make the hand dirty, or fine powder of material leaking from the infusion bag is not dispersed, which provides good operability. Further, since the hanging string is covered with the tag, the hanging string can be prevented from being caught in a seal portion during sealing of an individual package.

Brief Description of Drawings

[Figure 1] Figure 1 is a perspective view showing an example of an infusion bag according to an embodiment of the present invention.
[Figure 2] Figure 2 is an enlarged plan view of an example of a tag portion of the infusion bag in Figure 1.

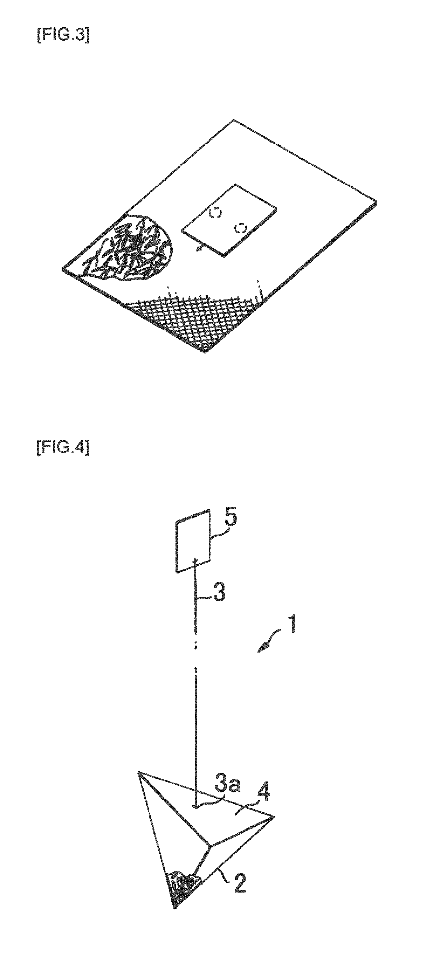

[Figure 3]Figure 3 is a perspective view of an illustrative infusion bag according to another embodiment of the present invention.
[Figure 4] Figure 4 is a perspective view showing a hanging string of the infusion bag in Figure 1 being stretched.

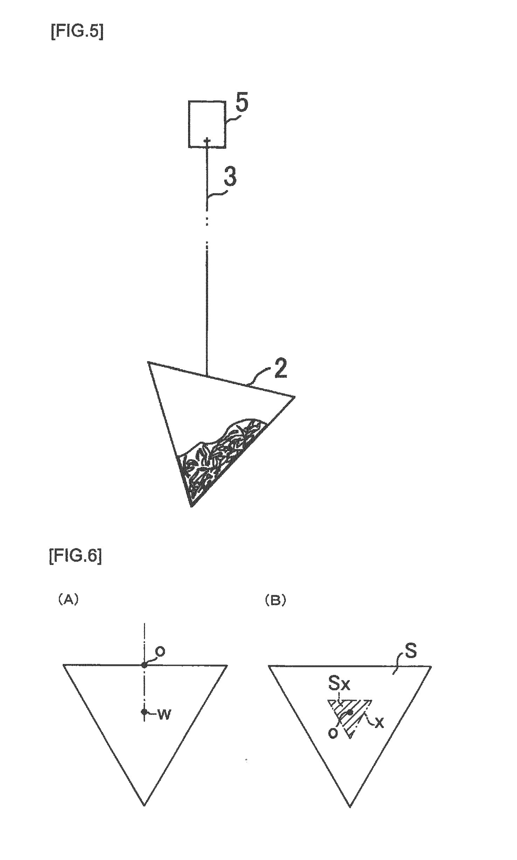

[Figure 5] Figure 5 is a side view showing the infusion bag in Figure 1 being hung.
[Figure 6] Figure 6(A) is a sectional view of a bag portion of the infusion bag in Figure 1 taken along a vertical line passing through a gravity point, and Figure 6(B) is a plan view of the bag portion of the infusion bag in Figure 1.
[Figure 7] Figure 7 is an enlarged sectional view of an example of a tag portion of the infusion bag in Figure 1.
[Figure 8] Figure 8 is a side view showing an example of a conventional infusion bag.

Description of Embodiment

An embodiment of an infusion bag according to the present invention will now be described. The present invention is not limited to the embodiment.

(The infusion bag 1)

As shown in Figures 1 and 2, an infusion bag 1 (hereinafter referred to as "the infusion bag 1 ") according to an embodiment of the present invention includes a bag portion 2 containing a substance used for infusion, and a hanging string 3 having a front end to which a tag 5 is fastened.

(Bag portion 2)

The bag portion 2 may be made of any permeable material. For example, the bag portion 2 may be formed of a sheet of synthetic fiber such as polyester, nylon, polyethylene, or polypropylene, nonwoven fiber, porous film, or the like. In particular, a sheet to which a tag can be fastened by heat seal or ultrasonic seal is preferable.
A thickness of the sheet for forming the bag portion 2 is preferably 0.01 mm to 0.16 mm, more preferably, 0.02 mm to 0.12 mm, and particularly preferably 0.06 mm to 0.10 mm.
The bag portion 2 may be formed into any bag shape. For example, the bag portion 2 may be formed into a polyhedron such as a triangular pyramid or a hexahedron, a cylindrical shape, and also a flat shape including a rectangle on plan view such as a square or an oblong on plan view, and a triangle on plan view. In particular, the bag portion 2 is preferably formed into an inverted triangular pyramid (tetrahedron) as shown in Figure 1 or an oblong on plan view as shown in Figure 3.

A preferable triangular pyramid is a triangular pyramid, 45 mm to 80 mm, particularly 50 mm to 60 mm on a side. A preferable flat oblong on plan view is an oblong of 70 mm to 90 mm by 50 mm to 65 mm.

The substance used for infusion contained in the bag portion 2 includes, for example, green tea leaves, black tea leaves, oolong tea leaves, herbs, wild grass, mixed tea leaves, barley grains, pearl barley grains, coffee grains, or bonito flakes.

The quantity of the substance used for infusion is not particularly limited. The quantity of the substance contained is preferably 1.0 g to 10.0 g, more preferably 1.5 g to 9.0 g, and particularly preferably 2.0 g to 8.0 g.

(Hanging string 3)

The hanging string 3 may be made of any material. For example, the hanging string 3 may be a string of synthetic fiber that can be heat sealed or ultrasonic sealed such as polyester, nylon, polyethylene, or polypropylene. In particular, a string on which a crease mark is hardly left when wound and that easily returns to its original linear state is preferably used. Such a string can be determined by measuring resilience to the linear state.

Static load elongation of the hanging string 3 is preferably 4 mm to 8 mm, more preferably 5 mm to 7 mm.

The static load elongation can be adjusted by a material or a thickness of the hanging string, the number of twisted yarns, or the like. In order to obtain the above described range, it is preferable that 3 to 8, more preferably 4 to 6 yarns are twisted to have a thickness of 0.4 mm to 1.2 mm, particularly 0.5 mm to 1.0 mm.

The static load elongation of the hanging string can be measured by fitting the hanging string to a Marlens fatigue tester. Specifically, a hanging string having a length of 250 mm is immersed in hot water at 90°C for one minute, and then an indication line having a length of 100 mm is drawn at the center. The hanging string is fitted to the Marlens fatigue tester with a clamp gap of 150 mm, left for 10 minutes with a load of 500 g being applied thereon. Then, a length of the indication line is measured, and from this value, the original length of 100 mm is subtracted, thereby calculating the static load elongation.

The length of the hanging string 3 is preferably 160 mm to 260 mm, and more preferably 170 mm to 200 mm so that the infusion bag is easily used in a mug or the like.

(Tab 5)

As shown in Figure 4, a tag 5 is fastened to a front end of the hanging string 3.

The tag 5 is held by fingers to pick up the infusion bag 1, and is preferably shaped so as to be easily held by fingertips. For example, the tag may be formed into a sheet or a flat plate having a circular, heart, clover, oval, square, or oblong shape on plan view.

The tag 5 may be made of any material. For example, a piece of laminated paper is preferably used that has one side laminated with resin such as polyethylene and can be heat sealed or ultrasonic sealed.

A thickness of the tag 5 is preferably 0.09 mm to 0.36 mm, more preferably 0.14 mm to 0.28 mm, and particularly preferably 0.18 mm to 0.21 mm.

(Position and method of fastening base end of hanging string 3 to bag portion 2)

The base end of the hanging string 3 is fastened to the surface of the bag portion 2.

Preferably, as shown in Figure 6(A), a fastening position of the base end of the hanging string 3 is a position deviated from an intersection O between a vertical line passing through a geometric gravity point W of a polyhedron and a surface 4, when it is assumed that the shape of the bag portion 2 is a polyhedron, that is, a polyhedron formed of only planes even if the surface of the bag portion 2 is rounded, and the surface 4 of the bag portion 2 to which the base end of the hanging string 3 is fastened is horizontally oriented.

The geometric gravity point W of the bag portion 2 is a geometric gravity point of a polyhedron of the extended bag portion 2 containing no substance used for infusion.

A fastening position of the base end of the hanging string 3 is preferably a position with a percentage of area of more than 0% to less than 98%, more preferably 2% to 95%, further preferably 5% to 95%, even further preferably 10% to 90%, and particularly preferably 15% to 85%.

For the "percentage of area" herein, a total area of the surface of the bag portion to which the base end of the hanging string is fastened, and an area of a shape similar to the surface passing through the fastening position of the base end are calculated to obtain a percentage of the area of the similar shape with respect to the total area. For example, as shown in Figure 6(B), for an inverted triangular pyramid bag portion, when the total area of the surface of the bag portion is S, and an area of a triangle passing through the fastening position (point X) of the base end of the hanging string is $S_x$, the following expression 1 can be used to calculate the percentage:

$$(S_x/S) \times 100 \ldots \text{Expression 1.}$$

Specifically, when the surface to which the base end of the hanging string is fastened is horizontally oriented, the percentage of area is 0% if the base end is fastened to the intersection position O between the vertical line passing through the gravity point of the bag portion and the surface, and the percentage of area is 100% if the base end is fastened to an outer edge of the surface.

In a conventional infusion bag, a hanging string is attached near the center of one surface, and the surface is horizontally oriented in infusion. This increases resistance when the teabag is vertically waved in hot water in infusion to prevent infusion.

Also, in the conventional infusion bag, a substance used for infusion in a bag portion gathers at a lower end apex. This prevents the substance used for infusion from opening to reduce infusion capability. Further, when the teabag is pulled up from an infusion liquid, the infusion liquid tends to gather at the lower end apex, which prevents liquid cut and provides continuous dripping.

On the other hand, in the infusion bag 1, the base end of the hanging string 3 is fastened to the position deviated from the intersection O between the vertical line passing through the gravity point W and the surface 4. Thus, as shown in Figure 5, the bag portion 2 is tilted when being hung, which reduces resistance when the bag portion 2 is vertically waved in hot water in infusion, and allows the bag portion 2 to be easily pulled up. In particular, for a bag portion 2 having an inverted triangular pyramid shape, the bag portion 2 is tilted when being hung, the substance used for infusion easily spread in the bag portion 2 and are properly dispersed, and thus tea leaves can sufficiently open in hot water, thereby providing good infusion capability. Further, conventionally, the infusion liquid tends to gather at a lower end apex, which prevents liquid cut and provides continuous dripping. On the other hand, for the infusion bag 1, an infusion liquid gradually gathers at a lower end apex, thereby providing good liquid cut and prevents dripping as compared to the conventional infusion bag.

(Placement of hanging string 3)

The hanging string 3 is preferably collected into a spiral and placed on the surface 4 of the bag portion 2, for example as shown in Figure 2. The hanging string 3 is thus collected into a spiral and placed, thereby allowing the hanging string 3 to be stretched without being entangled when the tag 5 is picked up.

The "spiral" herein includes, for example, a spiral with circles or ovals continuous to be shifted in a direction perpendicular to a turning direction as shown in Figure 2, and also includes a whorl continuous to be concentrically shifted in a turning direction.

The hanging string 3 is preferably collected so that parts of the hanging string 3 do not overlap as much as possible. For example, as shown in Figure 2, the hanging string 3 is preferably collected in such a manner that ovals are laterally shifted.

Further, the hanging string 3 may be collected so as to cover the fastening portion of the base end 3a to the surface of the bag portion 2. However, in terms of facilitating return of the hanging string to the linear state, as shown in Figure 2, the hanging string 3 is preferably collected in a position apart from the fastening portion of the base end 3a to the surface of the bag portion 2.

(Placement of tag 5)

It is important that the tag 5 is detachably fastened to the surface 4 of the bag portion 2 so as to cover the hanging string 3 collected as described above.

Thus, by picking up the tag 5, the hanging string 3 is stretched to allow the bag portion 2 to be hung, which does not require work for unwinding the hanging string as is conventional, and improves operability.

The tag 5 does not need to cover the entire hanging string 3, and a part of the hanging string 3 may be exposed. The hanging string 3 is thus covered with the tag 5, thereby preventing the hanging string from being caught in a seal portion during sealing of an individual package.

The tag 5 may be fastened to the surface 4 of the bag portion 2 by any means, but is preferably fastened by heat seal, ultrasonic seal, or the like.

The hanging string 3 is preferably held between at least two fastening portions 6, 6 at which the tag 5 is fastened to the surface 4 of the bag portion 2. This can prevent the hanging string 3 from being unwound by itself.

The tag 5 is preferably formed to have a protrusion "t" of 3 mm or less, more preferably 2 mm or less from the surface 4 as shown in Figure 7 in a state where the tag 5 covers the hanging string 3 and is detachably fastened to the surface 4 of the bag portion 2. This can reduce a thickness of an individual package. For example, as described above, the above described protrusion can be obtained by collecting the hanging string 3 with circles or ovals being laterally shifted so that parts of the hanging string 3 do not overlap as much as possible.

(Method for manufacturing infusion bag 1)

The infusion bag 1 can be manufactured by collecting the hanging string 3 into a spiral and placing the hanging string 3 on the surface 4 of the bag portion 2, and then detachably fastening the tag 5 to the surface 4 of the bag portion 2 so as to cover the hanging string 3.

For example, a hanging string with a tag is collected into a spiral and placed on a permeable filter sheet of a long strip shape, and the tag is placed on the hanging string and detachably fastened to the sheet. Then, the sheet is used to manufacture the infusion bag 1 using a conventional automatic teabag packaging machine.

(Advantage of the infusion bag 1)

The infusion bag 1 allows even a long hanging string 3 to be easily stretched, can provide good operability in infusion and good infusion capability, improve liquid cut after infusion, and prevent dripping. Also, the hanging string can be prevented from being caught in a seal portion during sealing of an individual package.

(Description of terms)

In the present invention, "X to Y" (X and Y are any numbers) means "X or more and Y or less" unless otherwise specified, and also includes meaning of "preferably more than X and less than Y".

(Test 1)

A fastening position of a hanging string to an infusion bag was changed, and an influence on liquid cut and dripping was tested.

A hanging string made of polypropylene, formed of six yarns twisted, and having a thickness of 0.5 mm was used.

A bag portion made of nylon and having a triangular pyramid shape, about 50 mm on a side, and a bag portion made of nylon and having a flat shape of 70 mm by 50 mm were used. The bag portion contained green tea leaves of 1.8 g.

The fastening position of a base end of the hanging string was represented by the percentage of area described above.

For the triangular pyramid infusion bag, the hanging string was fastened to positions of 0%, 2%, 15%, 50%, and 98%. For the flat infusion bag, the hanging string was fastened to a position of 90%.

The infusion bags were steeped in hot water, immediately thereafter, vertically waved five times and picked up. Then, "cut of infusion liquid", "dripping after infusion", "ease of stir", and "leachability" were checked.

For "cut of infusion liquid", it was measured after how many seconds the liquid is cut when the infusion bag was taken out of the hot water. It was determined that the case of 6 seconds or more was "x (poor)", the case of 4 seconds to less than 6 seconds was "Δ (moderate)", the case of 2 seconds to less than 4 seconds was "○ (good)", and the case of 1 second to less than 2 seconds was "◎ (very good)".

For "dripping after infusion", the time between the liquid cut and fall of a next droplet when the infusion bag was taken out of the hot water was measured. It was determined that the case of 7 seconds or more was "◎ (very good)", the case of 5 seconds to less than 7 seconds was "○ (good)", the case of 3 seconds to less than 5 seconds was "Δ (moderate)", and the case of 1 second to less than 3 seconds was "x (poor)".

For "ease of stir", the infusion bag was steeped in hot water, and the degree of mixing of the infusion liquid when the infusion bag was vertically waved five times was visually checked. It was determined that the case of not mixed was "× (poor)", the case of slightly mixed was "Δ (moderate)", the case of mixed was "○ (good)", and the case of well mixed was "◎ (very good)".

For "leachability", a skilled tester tasted and checked the degree of leaching of flavor after the infusion bag was vertically waved five times. It was determined that the case of light flavor was "× (poor) ", the case of slightly light flavor was "Δ (moderate)", the case of slightly strong flavor was "○ (good)", and the case of strong flavor was "◎ (very good)".

The results are shown in Table 1 below.

[Table 1]

| Shape of teabag | Triangular pyramid | Triangular pyramid | Triangular pyramid | Triangular pyramid | Flat | Triangular pyramid |
|---|---|---|---|---|---|---|
| Fastening position | 0% | 2% | 15% | 50% | 90% | 98% |
| Length of hanging string | 160 mm | 170 mm | 170 mm | 200 mm | 230 mm | 260 mm |
| Cut of infusion liquid | ○ (good) | ○ (good) | ○ (good) | ◎ (very good) | ○ (good) | × (poor) |
| Dripping after infusion | × (poor) | Δ (moderate) | ○ (good) | ◎ (very good) | ○ (good) | ○ (good) |
| Ease of stir | Δ (moderate) | ○ (good) | ◎ (very good) | ○ (good) | ○ (good) | Δ (moderate) |
| Leachability | ○ (good) | ○ (good) | ◎ (very good) | ○ (good) | Δ (moderate) | ○ (good) |
| Comprehensive evaluation | Δ (moderate) | ○ (good) | ◎ (very good) | ◎ (very good) | ○ (good) | Δ (moderate) |

For each evaluation, "◎ (very good)" was counted as 3 points, "○ (good)" as 2 points, "Δ (moderate)" as 1 point, and "x(poor)" as 0 point, and the points of four items were summed in the comprehensive evaluation. A total of 9 points or more was evaluated as "◎ (very good)", 6 to 8 points as "○ (good)", 3 to 7 points as "Δ (moderate)", and 2 points or less as "x (poor)".

As a result, it was confirmed that fastening the hanging string near the center or the edge of the infusion bag surface prevents cut of the infusion liquid and causes more dripping.

(Test 2)

Hanging strings shown in Table 2 below were used to produce a triangular pyramid infusion bag similar to that with the fastening position of 50% and the hanging string of 200 mm in length in Table 1 used in Test 1 above, and an influence of static load elongation on ease of stir and leachability was tested.

The static load elongation of the hanging string was measured by fitting the hanging string to a Marlens fatigue tester. Specifically, a hanging string having a length of 250 mm was immersed in hot water at 90□C for one minute, and then an indication line having a length of 100 mm was drawn at the center. The hanging string was fitted to the Marlens fatigue tester with a clamp gap of 150 mm, left for 10 minutes with a load of 500 g being applied thereon. Then, a length of the indication line was measured, and from this value, the original length of 100 mm was subtracted, thereby calculating the static load elongation.

Each infusion bag was steeped in hot water at 90□C for one minute, vertically waved seven times, and "ease of stir" and "leachability" were checked.

For "ease of stir", the infusion bag was steeped in hot water, and the degree of mixing of the infusion liquid when the infusion bag was vertically waved seven times was visually checked. It was determined that the case of not mixed was "x (poor)", the case of slightly mixed was "Δ (moderate)", the case of mixed was "○ (good)", and the case of well mixed was "◎ (very good)".

For "leachability", a skilled tester tasted and checked the degree of leaching of flavor after the infusion bag was vertically waved seven times. It was determined that the case of light flavor was "x (poor)", the case of slightly light flavor was "Δ (moderate)", the case of slightly strong flavor was "○ (good)", and the case of strong flavor was "◎ (very good)".

The results are shown in Table 2 below.

[Table 2]

| Material of string | Nyron | Rayon | Polyester | Polyester | Polypropylene | Polypropylene | Polypropylene |
|---|---|---|---|---|---|---|---|
| The number of twisted vams | 4 | 3 | 4 | 6 | 6 | 6 | 6 |
| Thickness of string | 0.4 mm | 0.4 mm | 0.5 mm | 0.8 mm | 1.0 mm | 0.5 mm | 0.7 mm |
| Static load elongation | 12 mm | 10 mm | 9 mm | 3 mm | 4 mm | 8 mm | 6 mm |
| Ease of stir | Δ (moderate) | Δ (moderate) | Δ (moderate) | Δ (moderate) | ○ (good) | ○ (good) | ○ (good) |
| Leachability | Δ (moderate) | Δ (moderate) | Δ (moderate) | Δ (moderate) | ○ (good) | ○ (good) | ○ (good) |

As a result, the hanging string having the static load elongation of 4 mm to 8 mm provides satisfactory "ease of stir" and "leachability".

Reference Signs List

1    infusion bag
2    bag portion
3    hanging string
3a    base end
4    surface
5    tag
6    fastening portion


**Claims**

1.  An infusion bag comprising:

    a bag portion containing a substance used for infusion; and
    a hanging string having a front end to which a tag is fastened, and a base end fastened to a surface of the bag portion,
    wherein the hanging string is collected into a spiral and placed on the surface of the bag portion, and the tag is detachably fastened to the surface of the bag portion so as to cover the hanging string.

2.  The infusion bag according to claim 1, wherein the tag is detachably fastened at least at two spots to the surface of the bag portion so that fastening portions hold the hanging string therebetween.

3.  The infusion bag according to claim 1 or 2, wherein a fastening position of the base end of the hanging string is a position deviated from an intersection between a vertical line passing through a geometric gravity point of a polyhedron and the surface, when, given that the bag portion is a polyhedron, the surface of the bag portion to which the base end of the hanging string is fastened is horizontally oriented.

4.  The infusion bag according to any one of claims 1 to 3, wherein the hanging string is a string having static load elongation of 4 mm to 8 mm.

5.  A method for manufacturing an infusion bag including a bag portion containing a substance used for infusion, and a hanging string having a front end to which a tag is fastened, and a base end fastened to a surface of the bag portion, comprising the steps of:

    collecting the hanging string into a spiral and placing the hanging string on the surface of the bag portion; and then detachably fastening the tag to the surface of the bag portion so as to cover the hanging string.

6.  The method for manufacturing an infusion bag according to claim 5, wherein the tag is detachably fastened at least at two spots to the surface of the bag portion so that fastening portions hold the hanging string therebetween.

7.  The method for manufacturing an infusion bag according to claim 5 or 6, wherein a fastening position of the base end of the hanging string is a position deviated from an intersection between a vertical line passing through a geometric gravity point of a polyhedron and the surface, when, given that the bag portion is a polyhedron, the surface of the bag portion to which the base end of the hanging string is fastened is horizontally oriented.

8.  The method for manufacturing an infusion bag according to any one of claims 5 to 7, wherein the hanging string is a string having static load elongation of 4 mm to 8 mm.

[FIG.1]

[FIG.2]

[FIG.3]

[FIG.4]

[FIG.5]

[FIG.6]

(A)                              (B)

EP 2 730 517 A1

[FIG.7]

[FIG.8]

<div align="center">

**INTERNATIONAL SEARCH REPORT**

</div>

| | International application No. |
|---|---|
| | PCT/JP2012/066499 |

**A.   CLASSIFICATION OF SUBJECT MATTER**
*B65D77/00*(2006.01)i, *A23F3/16*(2006.01)i

According to International Patent Classification (IPC) or to both national classification and IPC

**B.   FIELDS SEARCHED**

Minimum documentation searched (classification system followed by classification symbols)
B65D77/00, A23F3/16

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| Y | WO 2010/146716 A1  (Ohki Co., Ltd.), 23 December 2010 (23.12.2010), fig. 1, 2; paragraphs [0021] to [0042] & TW 1100297 A | 1–8 |
| Y | JP 8-58724 A  (Tecnomeccanica S.r.l.), 05 March 1996 (05.03.1996), paragraphs [0016] to [0018]; fig. 7 & EP 691268 A1 | 1–8 |
| Y | JP 4-242514 A  (Unilever N.V.), 31 August 1992 (31.08.1992), paragraphs [0028], [0038]; fig. 3, 9 & GB 9006388 A        & US 5312318 A | 1–8 |

☐  Further documents are listed in the continuation of Box C.        ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 July, 2012 (17.07.12) | 14 August, 2012 (14.08.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002211641 A
- JP 2010120667 A
- JP 2002337936 A
- JP 2006021819 A
- JP 2007246128 A
- JP 3081339 B